# FASCICULE DE BREVET EUROPEEN

(11) **EP 0 350 347 B1**
(45) Date de publication et mention de la délivrance du brevet: **01.12.1993**
(21) Numéro de dépôt: 89401638.5
(22) Date de dépôt: 13.06.1989
(51) Int. Cl.: H01H 13/02, H02B 1/04

(54) **Dispositif d'actionnement et de fixation pour commutateur**
Betätigungs-und Haltevorrichtung eines Schalters
Actuation and fastening means for a switching device

(30) Priorité: 05.07.1988 FR 8809067
(43) Date de publication de la demande: 10.01.1990
(73) Titulaire: SOCIETE ELECTRONIQUE DE LA REGION PAYS DE LOIRE, F-75020 Paris (FR)
(72) Inventeur: Huerre, Dominique, F-92045 Paris la Défence (FR); Pissot, Guy, F-92045 Paris la Défence (FR)
(74) Mandataire: Chaverneff, Vladimir

(56) Documents cités:
- EP-A- 0 199 344
- CH-A- 634 686
- FR-A- 1 438 095
- FR-A- 1 571 249

## Description

La présente invention a pour objet un dispositif d'actionnement et de fixation pour un commutateur, tel qu'un commutateur marche/arrêt, du type décrit par le préambule de la revendication 1.

Un tel dispositif d'actionnement et de fixation pour un commutateur est connu par example du document FR-A-1 438 095.

Pour fixer un commutateur marche/arrêt du type à poussoir sur une façade d'appareil tel qu'un téléviseur, on a généralement recours à des moyens tels que des vis ou des écrous selon le type de commutateur. Une telle fixation n'est pas facilement automatisable. En outre, si on doit fixer un commutateur sur une cloison à formes complexes et dans un espace restreint comme c'est le cas pour un commutateur marche/arrêt de téléviseur, que l'on fixe sur la face arrière de la façade, ce commutateur risque de se trouver dans un endroit difficilement accessible de cette façade, entre des nervures de rigidification, et sa touche d'actionnement peut alors être soit trop petite, soit mal placée. Si on agrandit cette touche ou si on la fixe en porte-à-faux, le mécanisme d'actionnement du commutateur risque fort de se coincer ou de gripper.

La présente invention a pour objet un dispositif d'actionnement et de fixation pour commutateur qui permette de le fixer facilement avantageusement à l'aide d'un robot de montage pour une fabrication en grande série, même dans des emplacements difficiles d'accès et qui permette de lui adapter facilement des touches d'actionnement de formes diverses même pour un actionnement en porte-à-faux.

Le dispositif d'actionnement et de fixation conforme à l'invention comporte un corps de guidage creux fixe dans lequel se déplace longitudinalement un corps mobile de transmission le commutateur étant fixé au corps de guidage creux, un bouton d'actionnement étant fixé sur le corps mobile, et est caractérisé par le fait que le corps de guidage creux comporte deux types de nervures de guidage longitudinales et que le corps mobile comporte des tiges de guidage longitudinales dont une partie des faces entre en contact avec une partie des faces latérales des nervures, la longueur des surfaces en contact étant beaucoup plus importante que leur largeur, les surfaces de contact du premier type de nervure étant perpendiculaires à celles du deuxième type de nervures.

Des modes de réalisation avantageux sont mentionnés dans les revendications 2 à 5.

La présente invention sera mieux comprise à la lecture de la description détaillée d'un mode de réalisation pris comme exemple non limitatif et illustré par le dessin annexé, sur lequel :

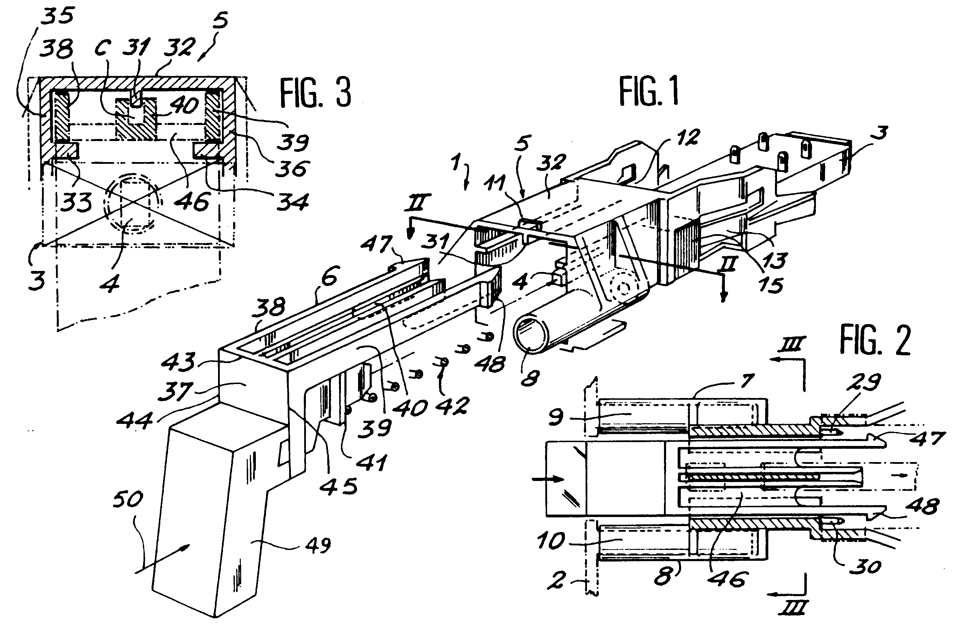

- la figure 1 est une vue éclatée en perspective d'un dispositif de fixation conforme à l'invention, avec un interrupteur,
- la figure 2 est une vue de dessus en coupe selon II-II de la figure 1,
- la figure 3 est une vue en coupe selon III-III de la figure 2, et

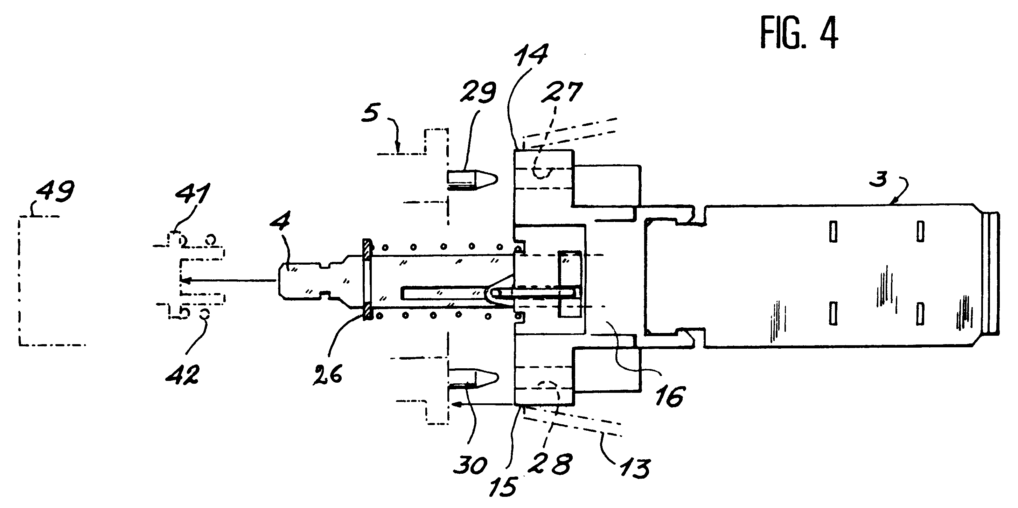

- la figure 4 est une vue en plan du commutateur de la figure 1 avec son support.

L'invention est décrite ci-dessous en référence à un commutateur marche/arrêt, mais il est bien entendu qu'elle n'est pas limitée à une telle application, et qu'elle peut être mise en oeuvre pour la commande de tout dispositif mécanique ou électromécanique comportant un axe d'actionnement à mouvement de translation longitudinale.

Le dispositif de fixation 1 décrit ci-dessous est destiné à la fixation, sur une paroi 2, d'un commutateur marche/arrêt bipolaire 3 comportant une tige axiale d'actionnement 4 ayant dans le cas présent une section droite se présentant sensiblement sous la forme d'un carré.

Le dispositif 1 comporte essentiellement un corps de guidage creux fixe 5 dans lequel se déplace longitudinalement un corps de transmission mobile 6. Le corps 5 de section rectangulaire comporte à sa partie antérieure (la plus proche de la paroi 2 en position fixée) deux tubes de guidage longitudinaux 7,8 coopérant avec des broches de guidage 9,10 formées sur la paroi 2. Le corps 5 comporte également à sa partie antérieure un bossage ou crochet d'encliquetage 11 coopérant avec un ergot correspondant (non représenté) formé sur la paroi 2.

Le corps 5 comporte à sa partie postérieure deux languettes latérales d'encliquetage 12,13 coopérant avec des bossages latéraux 14,15 formés sur une pièce de fixation 16 rapportée à la partie antérieure du commutateur 3.

Des trous longitudinaux 27,28 sont pratiqués dans les bossages 14,15 de la pièce 16. Ces trous coopèrent avec des tétons 29,30 formés à la partie postérieure du corps 5, pour guider et maintenir en place la pièce 16 avec le commutateur 3 lorsque les bossages 14,15 s'encliquètent avec les languettes 12,13.

Le corps 5 comporte une première nervure longitudinale intérieure 31, de section rectangulaire par exemple, formée au milieu de sa paroi 32 et s'étendant sur pratiquement toute la longueur de la paroi 32. Le corps 5 comporte deux autres nervures longitudinales intérieures, de section rectangulaire 33,34 formées chacune sur une de ses parois latérales 35,36 respectivement, ces parois 35,36 étant parallèles à la nervure 31. Les nervures 33,34 sont toutes deux à la même distance de la paroi 32, à peu près au tiers de la hauteur des parois 35,36 à partir de la paroi 32.

Le corps 6 comporte essentiellement une paroi 37 formée intégralement avec des tiges de guidage latérales 38,39 d'égale longueur et une tige de guidage centrale 40 un peu plus courte que les tiges 38,39, ainsi qu'avec un bossage 41 servant de fixation à une extrémité d'un ressort 42 dont l'autre extrémité s'appuie sur la bague 26 de la tige 4.

La paroi 37 est de forme rectangulaire, de dimensions sensiblement égales aux dimensions intérieures de la section droite du corps 5. Un des petits côtés du pourtour rectangulaire de la paroi 37 est référencé 43, et les deux grands côtés adjacents au côté 43 sont référencés 44,45.

Les tiges 38,39 sont perpendiculaires à la paroi 37 et sont formées à partir des coins des côtés 43,44 et 43,45 respectivement. Les tiges 38 et 39 ont une section rectangulaire dont le grand côté est confondu avec le côté 44,45 respectivement. La tige 40 a une section en "U" dont l'ouverture arrive presque au ras du côté 43, les deux branches de cet "U" étant perpendiculaires au côté 43. L'axe de cet "U" passe par le milieu du côté 43. La distance entre les branches du "U" est sensiblement égale à l'épaisseur de la nervure 31. La section droite de la tige 40 a un contour rectangulaire, dont le côté opposé à l'ouverture du "U" est coplanaire avec les petits côtés des tiges 38,39.

La longueur des grands côtés de la section des tiges 38,39 est sensiblement égale à la distance entre les nervures 33,34 et la paroi 32. La distance entre les grandes faces extérieures des tiges 38,39 est légèrement inférieure à la distance entre les parois 35,36. Les branches 38,39 et 40 sont reliées, sur leurs côtés opposés au côté 43, par un voile 46 qui s'étend à partir de la paroi 37 sur environ les 2/3 de la longueur des branches 38,39.

Les extrémités des tiges 38,39 sont formées en crochets 47,48 tournés vers l'extérieur. Ces crochets 47,48 permettent de retenir le corps 6 dans le corps 5 lorsque l'on a introduit à fond les tiges 38,39 dans l'espace rectangulaire déterminé entre la paroi 32 et les nervures 33,34 du corps 5. Les extrémités des tiges 38,39 étant élastiques, elles se rapprochent légèrement l'une de l'autre lorsque l'on engage leurs extrémités en forme de crochets 47,48 dans le corps 5. Lorsque ces crochets ressortent de l'autre côté du corps 5, les tiges 38,39 reviennent en position normale, et les crochets retiennent le corps mobile 6 dans le corps 5.

Les surfaces du corps mobile 6 en contact avec le corps 5 sont les suivantes :
- extrémités des branches en vis-à-vis de la tige 40, en contact avec les faces latérales de la nervure 31 sur une partie de la hauteur de cette nervure. On obtient ainsi un guidage du corps 6 selon une direction perpendiculaire à l'axe de la nervure 31.
- petits côtés latéraux des tiges 38,39 en contact avec les surfaces en regard de la paroi 32 et des nervures 33,34.

Etant donné que la longueur (mesurée selon l'axe longitudinal du corps 6) de ces surfaces en contact est beaucoup plus grande (au moins dix fois) que leur largeur, il n'y a aucun risque de grippage du corps 6 dans le corps 5, même si on actionne ce corps 6 en porte-à-faux, c'est-à-dire si on n'appuie pas sur la paroi 37 au niveau du centre C du rectangle délimité par les pieds des tiges 38,39 sur la paroi 37. Pour cette raison, on peut fixer, par example par encliquetage, un bouton d'actionnement 49, dont la surface d'actionnement (indiquée par une flèche 50) est éloignée dudit centre C.

Selon un exemple de réalisation, la longueur des surfaces de contact des corps 5 et 6 est d'environ 30 mm, et la largeur de chacune d'elles est d'environ 2 mm.

Due fait que la touche d'actionnement 49 peut être fixée par encliquetage sur la paroi 37, il est très aisé de la personnaliser sans modifier le reste du dispositif de fixation du commutateur, qui peut être standardisé.

## Revendications

1. Dispositif d'actionnement pour un commutateur (3) et de fixation de celui-ci sur une paroi de support (2), comportant un corps de guidage creux fixe (5) dans lequel se déplace longitudinalement un corps mobile de transmission (6), le commutateur étant fixé au corps de guidage creux (5), un bouton d'actionnement (49) étant fixé sur le corps mobile (6), caractérisé par le fait que le corps de guidage creux (5) comporte deux types de nervures de guidage longitudinales (31; 33, 34) et que le corps mobile (6) comporte des tiges de guidage longitudinales (38, 39, 40) dont une partie des faces entre en contact avec une partie des faces latérales des nervures (31; 33, 34), la longueur des surfaces en contact étant beaucoup plus importante que leur largeur, les surfaces de contact du premier type de nervure (31) étant perpendiculaires à celles du deuxième type de nervures (33, 34).

2. Dispositif de fixation selon la revendication 1, caractérisé par le fait que deux desdites tiges de guidage longitudinales (38,39,40) du corps mobile (6) sont des tiges de guidage latérales (38,39) de section rectangulaire dont les petits côtes constituent un premier ensemble de surfaces de contact de guidage, et qu'une troisième desdites tiges de guidage longitudinales (38,39,40) du corps mobile (6) est une tige de guidage centrale (40) à section en "U" dont les extrémités des surfaces des branches en vis-à-vis constituent un second ensemble de surfaces de contact de guidage, et par le fait que la nervure dudit premier type est une nervure longitudinale (31) formée au milieu de la face intérieure d'une grande paroi (32) du corps de guidage creux (5) et perpendiculairement à cette paroi, et que les nervures dudit deuxième type sont deux nervures longitudinales (33, 34) formées chacune respectivement sur une face intérieure des parois latérales (35, 36) du corps de guidage creux (5), parallèlement à ladite grande paroi (32), les extrémités des surfaces des branches en vis-a-vis de ladite tige centrale (40) entrant en contact avec les faces latérales de la nervure (31) dudit premier type sur une partie de la hauteur de cette nervure, les petits côtés latéraux desdites deux tiges de guidage latérales (38, 39) entrant en contact avec les surfaces correspondantes de ladite grande paroi (32) du corps de guidage creux (5) et avec une partie de la surface des deux nervures longitudinales dudit deuxième type (33, 34).

3. Dispositif de fixation selon la revendication 1 ou 2, caractérisé par le fait que le rapport de la longueur à la largeur des surfaces de contact est d'au moins 10.

4. Dispositif de fixation selon l'une des revendications précédentes, caractérisé par le fait que le commutateur (3) et le bouton d'actionnement (49) sont fixés par encliquetage sur les corps respectifs.

5. Dispositif de fixation selon l'une quelconque des revendications précédentes, caractérisé par le fait que le corps de guidage creux (5) comporte des moyens de fixation par encliquetage (11) sur sa paroi de support (2).

## Claims

1. Actuating device for a switch (3) and for fixing it onto a support wall (2) including a fixed hollow guidance body (5) in which there moves longitudinally a movable transmission body (6), the switch being fixed to the hollow guidance body (5), an actuating button (49) being fixed onto the movable body (6), characterized in that the hollow guidance body (5) includes two types of longitudinal guidance ribs (31; 33, 34) and in that the movable body (6) includes longitudinal guidance rods (38, 39, 40) a part of whose faces comes into contact with a part of the lateral faces of the ribs (31; 33, 34), the length of the contacting surfaces being much greater than their width, the contacting surfaces of the first type of rib (31) being perpendicular to those of the second type of ribs (33, 34).

2. Fixing device according to Claim 1, characterized in that two of the said longitudinal rods (38, 39, 40) for guiding the movable body (6) are lateral guidance rods (38, 39) of rectangular cross-section whose short sides constitute a first set of guidance contact surfaces, and in that a third of the said longitudinal rods (38, 39, 40) for guiding the movable body (6) is a central guidance rod (40) with a U-shaped cross-section the ends of the surfaces of whose facing branches constitute a second set of guiding contact surfaces, and in that the rib of the said first type is a longitudinal rib (31) formed at the middle of the inner face of a long wall (32) of the hollow guidance body (5), and perpendicularly to this wall, and in that the ribs of the said second type are two longitudinal ribs (33, 34) each respectively formed on an inside face of the lateral walls (35, 36) of the hollow guidance body (5), parallel to the said long wall (32), the ends of the surfaces of the facing branches of the said central rod (40) coming into contact with the lateral faces of the rib (31) of the said first type over a part of the height of this rib, the small lateral sides of the said two lateral guidance rods (38, 39) coming into contact with the corresponding surfaces of the said long wall (32) of the hollow guidance body (5) and with a part of the surface of the two longitudinal ribs of the said second type (33, 34).

3. Fixing device according to Claim 1 or 2, characterized in that the ratio of the length to the width of the contacting surfaces is at least 10.

4. Fixing device according to one of the preceding claims, characterized in that the switch (3) and the actuating button (49) are clipped onto the respective bodies.

5. Fixing device according to any one of the preceding claims, characterized in that the hollow guidance body (5) includes means (11) for clipping onto its support wall (2).

## Patentansprüche

1. Vorrichtung zum Betätigen eines Schalters (3) und zum Befestigen desselben an einer Trägerwand (2), mit einem hohlen, festen Führungskörper (5), in dem sich in Längsrichtung ein beweglicher Übertragungskörper (6) verschiebt, wobei der Schalter am hohlen Führungskörper (5) befestigt ist, und wobei ein Betätigungsknopf (49) am beweglichen Körper (6) befestigt ist, dadurch gekennzeichnet, daß der hohle Führungskörper (5) zwei Typen von Längsführungsrippen (31; 33, 34) enthält, und daß der bewegliche Körper (6) Längsführungsstäbe (38, 39, 40) enthält, von denen sich ein Teil der Flächen in Kontakt mit einem Teil der Seitenflächen der Rippen (31; 33, 34) befindet, wobei die Lange der sich berührenden Flächen sehr viel größer als ihre Breite ist, und wobei die Berührungsflächen des ersten Rippentyps (31) sich im rechten Winkel zu denen des zweiten Rippentyps (33, 34) befinden.

2. Befestigungsvorrichtung nach Anspruch 1, dadurch gekennzeichnet, daß zwei der Längsführungsstäbe (38, 39, 40) des beweglichen Körpers (6) Seitenführungsstäbe (38, 39) mit rechteckigem Querschnitt sind, deren kleine seitliche Führungsflächen eine erste Führungskontaktflächengruppe bilden, daß ein dritter der Längsführungsstäbe (38, 39, 40) des beweglichen Körpers (6) ein mittlerer Führungsstab (40) mit einem U-förmigen Querschnitt ist, dessen sich gegenüberliegende Enden der Schenkelflächen eine zweite Führungskontaktflächengruppe bilden, daß die Rippe des ersten Typs eine Längsrippe (31) ist, die in der Mitte der Innenseite einer großen Wand (32) des hohlen Führungskörpers (5) senkrecht zu dieser Wand gebildet ist, und daß die Rippen des zweiten Typs Längsrippen (33, 34) sind, die jeweils an einer Innenseite der Seitenwände (35, 36) des hohlen Führungskörpers (5) parallel zur großen Wand (32) gebildet sind, wobei die einander gegenüberliegenden Enden der Schenkelflächen des mittleren Stabes (40) die Seitenflächen der Rippe (31) des ersten Typs in einem Abschnitt mit der Höhe dieser Rippe berühren, und wobei die kleinen Seitenflächen der beiden seitlichen Führungsstäbe (38, 39) die entsprechenden Flächen der großen Wand (32) des hohlen Führungskörpers (5) und mit einem Teil der Fläche die beiden Längsrippen (33, 34) des zweiten Typs berühren.

3. Befestigungsvorrichtung nach Anspruch 1 oder 2, dadurch gekennzeichnet, daß das Verhältnis der Länge der Kontaktflächen zu ihrer Breite wenigstens 10 beträgt.

4. Befestigungsvorrichtung nach einem der vorhergehenden Ansprüche, dadurch gekennzeichnet, daß der Schalter (3) und der Betätigungsknopf (49) durch Einrasten an den entsprechenden Körpern befestigt sind.

5. Befestigungsvorrichtung nach einem der vorhergehenden Ansprüche, dadurch gekennzeichnet, daß der hohle Führungskörper (5) Befestigungsmittel (11) enthält, die in der Trägerwand (2) einrasten.
